# FASCICULE DE BREVET EUROPEEN

(11) **EP 3 598 062 B1**
(45) Date de publication et mention de la délivrance du brevet: **13.07.2022**
(21) Numéro de dépôt: 19186367.9
(22) Date de dépôt: 15.07.2019
(51) Int. Cl.: G01B 11/25, G01B 11/26, G01B 11/02

(54) **PROCEDE DE CONTROLE DE LA QUALITE ET/OU DE MESURE DES PARAMETRES DIMENSIONNELS DE PROFILES, DISPOSITIF PERMETTANT LA MISE EN OEUVRE DUDIT PROCEDE ET LIGNE DE PRODUCTION COMPRENANT UN TEL DISPOSITIF**
VERFAHREN ZUR QUALITÄTSKONTROLLE UND/ODER ZUR MESSUNG VON ABMESSUNGSPARAMETERN VON PROFILEN, VORRICHTUNG ZUR UMSETZUNG DIESES VERFAHRENS UND EINE SOLCHE VORRICHTUNG UMFASSENDE PRODUKTIONSLINIE
METHOD FOR QUALITY CONTROL AND/OR FOR MEASURING DIMENSIONAL PARAMETERS OF PROFILES, DEVICE FOR IMPLEMENTING SAID METHOD AND PRODUCTION LINE COMPRISING SUCH A DEVICE

(30) Priorité: 19.07.2018 FR 1856691
(43) Date de publication de la demande: 22.01.2020
(73) Titulaire: Eberle (Société par Actions Simplifiée), 67116 Reichstett (FR)
(72) Inventeur: PRIESTER, Claude, 67000 STRASBOURG (FR)
(74) Mandataire: Cabinet Nuss

(56) Documents cités:
- DE-A1- 10 328 537
- US-A- 4 613 234
- US-A- 6 133 948
- US-A1- 2008 013 103

## Description

La présente invention concerne le domaine des lignes de production de profilés réalisés à partir d'au moins une bande de matériau, plus particulièrement une bande de carton ou de matériau thermoplastique tel que, par exemple, du PVC. Elle a pour objet un procédé de contrôle pour contrôler la qualité et/ou mesurer des paramètres dimensionnels de profilés réalisés dans une ligne de production, un dispositif de contrôle permettant la mise en œuvre dudit procédé et une ligne de production de profilés comprenant un tel dispositif. DE 103 28 537 A1 décrit un dispositif de contrôle dimensionnel optique d'un objet profilé comprenant un appareil de projection d'un faisceau lumineux vertical plan.

On sait qu'une ligne de production de profilés, de forme plane ou en forme de cornière ou autre forme de profilé plié, réalisés à partir d'une ou plusieurs bandes de matériau, plus particulièrement de carton, notamment de carton plat ou ondulé, ou de matériau thermoplastique, par exemple du PVC, comprend généralement depuis l'amont vers l'aval, c'est à dire dans le sens du flux de circulation de la ou des bandes dans ladite ligne, une unité de stockage et d'alimentation, consistant généralement en une unité de dévidage comportant au moins un dévidoir dans lequel est stocké à l'état enroulé la ou l'une desdites bandes, une unité de traction et une unité de coupe pour couper une longueur donnée de profilé.

Un tel profilé est allongé et s'étend longitudinalement le long de son axe longitudinal en étant délimité dans la direction de son épaisseur entre sa surface externe et sa surface interne, ladite surface interne ou externe étant plane ou comportant au moins un pli longitudinal selon que le profilé est plat ou présente une forme de cornière ou autre forme de profilé plié, généralement en forme de V ou de U.

Dans le cas le plus fréquent où les profilés sont réalisés chacun à partir d'une pluralité de bandes de matériau, la ligne de production comprend en outre une unité d'assemblage, généralement par encollage ou thermo-scellage, permettant de réaliser l'assemblage d'une pluralité de bandes les unes sur les autres pour former l'épaisseur du profilé. En outre, dans le cas où les profilés présentent une forme de cornière, la ligne de production comprend en outre une unité de formage permettant de réaliser le pliage de la bande ou de la superposition de bandes en vue de former le profilé. L'unité d'assemblage est située entre l'unité de stockage et d'alimentation et l'unité de traction. L'unité de formage est située entre l'unité de stockage et d'alimentation, ou le cas échéant l'unité d'assemblage, et l'unité de traction.

Le pliage de la bande ou de la superposition de bandes consiste à réaliser, dans l'unité de formage, une opération de déformation formant au moins un angle dont l'arête, ou le pli, est rectiligne et plus ou moins arrondi(e), ledit angle étant formé entre deux ailes longitudinales, ou plans ou parties droites, de la bande.

Toutefois, si les lignes de production actuelles permettent de réaliser des profilés de formes variées, avec des plis longitudinaux ou sans, et à des vitesses de production élevées, la qualité des produits obtenus n'est pas toujours exempte de défauts. En effet, il arrive fréquemment que certains paramètres dimensionnels du pliage tels que l'angle de pliage ou la largeur des ailes longitudinales de la cornière ou du plat formant le profilé ne correspondent pas exactement à l'angle ou à la largeur souhaitée ou que des défauts de surface apparaissent sur la surface des profilés. Les défauts de surface sont généralement représentatifs de défauts d'assemblage. La largeur étant définie dans le sens transversal du profilé perpendiculairement à son axe longitudinal ou son ou ses plis longitudinaux.

La présente invention a pour but de pallier ces inconvénients en proposant un procédé de contrôle permettant de contrôler la qualité et/ou de mesurer des paramètres dimensionnels de profilés réalisés dans une ligne de production.

A cet effet, le procédé de contrôle selon la présente invention pour contrôler la qualité et/ou mesurer des paramètres dimensionnels de profilés réalisés dans une ligne de production à partir d'au moins une bande de matériau, plus particulièrement au moins une bande de carton ou de matériau thermoplastique, tel que par exemple du PVC, chaque profilé présentant plus particulièrement une forme de cornière ou autre forme de profilé plié avec au moins deux ailes longitudinales inclinées l'une par rapport à l'autre et s'étendant le long d'un axe longitudinal en étant délimité d'un côté, par sa surface longitudinale externe et, de l'autre côté opposé, par sa surface longitudinale interne, consistant, à partir d'un dispositif de contrôle que comprend ladite ligne de production, ledit dispositif de contrôle comprenant, d'une part, au moins une unité optique comprenant un appareil de projection de lumière, tel qu'un laser, apte à émettre un faisceau plan de lumière permettant de former une ligne lumineuse sur le profilé à contrôler et un appareil de prise de vue, tel qu'une caméra, présentant un axe optique et étant associé(e) à l'appareil de projection de lumière et apte à acquérir au moins une image de ladite ligne lumineuse et, d'autre part, une unité de traitement électronique reliée fonctionnellement à la ou à chaque unité optique pour traiter la ou lesdites images acquises et transmises par le ou lesdits appareil(s) de prise de vue :
- à projeter sur le profilé à contrôler, plus particulièrement sur sa surface longitudinale externe et/ou sur sa surface longitudinale interne, au moins un faisceau plan de lumière, dans un plan sensiblement perpendiculaire à l'axe longitudinale, pour former, sur ledit profilé, plus particulièrement sur au moins l'une desdites surfaces longitudinales externe ou interne, au moins une ligne lumineuse s'étendant sensiblement perpendiculairement à l'axe longitudinal,
- à acquérir au moins une image de la ou de chaque ligne lumineuse et
- à analyser la ou chaque image d'une ligne lumineuse en vue de contrôler la qualité et/ou mesurer des paramètres dimensionnels du profilé, se caractérise en ce qu'il consiste, à partir de la ou de l'une des ligne(s) lumineuse(s) formée(s) sur la surface longitudinale externe ou interne et comportant deux branches lumineuses inclinées entre elles du fait de l'inclinaison desdites ailes, l'une desdites branches lumineuses étant formée sur l'une desdites ailes longitudinales et l'autre branche lumineuses étant formée sur l'autre aile longitudinale, à contrôler la valeur de l'angle entre lesdites ailes en mesurant, sur la ou les images acquises, l'angle entre les deux branches de la ligne lumineuse et en la comparant avec une valeur d'angle de référence.

La présente invention a également pour objet un dispositif de contrôle pour contrôler la qualité et/ou mesurer des paramètres dimensionnels de profilés réalisés dans une ligne de production à partir d'au moins une bande de matériau, plus particulièrement au moins une bande de carton ou de matériau thermoplastique tel que par exemple du PVC, ledit dispositif de contrôle permettant la mise en œuvre du procédé de contrôle selon la présente invention, ledit profilé présentant une forme de cornière ou autre forme de profilé plié avec au moins deux ailes longitudinales inclinées l'une par rapport à l'autre et s'étendant le long d'un axe longitudinal en étant délimité dans la direction de son épaisseur, d'un côté, par sa surface longitudinale externe et, de l'autre côté opposé, par sa surface longitudinale interne, comprenant, d'une part, au moins une unité optique comprenant un appareil de projection de lumière, tel qu'un laser, apte à émettre un faisceau plan de lumière permettant de former une ligne lumineuse sur le profilé à contrôler et un appareil de prise de vue, tel qu'une caméra, présentant un axe optique et étant associé(e) audit appareil de projection de lumière et apte à acquérir au moins une image de ladite ligne lumineuse comportant deux branches lumineuses inclinées entre elles du fait de l'inclinaison desdites ailes, l'une desdites branches lumineuses étant formée sur l'une desdites ailes longitudinales et l'autre branche lumineuses étant formée sur l'autre aile longitudinale et, d'autre part, une unité de traitement électronique reliée fonctionnellement à la ou à chaque unité optique pour traiter la ou lesdites images acquises et transmises par le ou lesdits appareil(s) de prise de vue, se caractérisant en ce que l'unité de traitement électronique comprend une mémoire dans laquelle est enregistrée au moins une valeur d'angle de référence et en ce que ladite unité de traitement électronique est apte à contrôler l'angle entre les ailes longitudinales du profilé en mesurant, sur la ou les images acquises, l'angle entre les deux branches de la ligne lumineuse et en comparant la valeur dudit angle avec la ou l'une des valeurs d'angle de référence mémorisées.

La présente invention a encore pour objet une ligne de production de profilés réalisés à partir d'au moins une bande de matériau, plus particulièrement au moins une bande de carton ou de matériau thermoplastique tel que par exemple du PVC, ledit profilé présentant une forme plane ou de cornière ou autre forme de profilé plié, ladite ligne de production comprenant successivement, depuis l'amont vers l'aval, une pluralité de postes, à savoir
- un poste de stockage et d'alimentation, tel que par exemple une unité de dévidage comprenant au moins un dévidoir, dans lequel la ou chaque bande est stockée, par exemple à l'état enroulé dans ladite unité de dévidage,
- éventuellement, dans le cas de la réalisation de profilés à partir d'une pluralité de bandes, une unité de d'assemblage, par exemple par encollage ou thermo-scellage, des bandes entre elles pour former le profilé,
- éventuellement, dans le cas de profilés en forme de cornière ou autre forme de profilé plié, une unité de formage pour plier le profilé, par exemple en forme de V de U ou de W,
- un poste de traction,
- un poste de coupe pour permettre la coupe d'une longueur donnée de profilé, caractérisé en ce qu'elle comprend en outre un dispositif de contrôle selon la présente invention monté dans ladite ligne.

L'invention sera mieux comprise, grâce à la description ci-après, qui se rapporte à au moins un mode de réalisation préféré, donné à titre d'exemple non limitatif, et expliqué avec référence aux dessins schématiques annexés, dans lesquels :
- la figure 1 est une représentation schématique en perspective d'un dispositif de contrôle selon la présente invention comprenant une unité optique projetant un faisceau plan de lumière sur la surface longitudinale interne d'un profilé en forme de cornière de section transversale en V,
- la figure 2 est une vue de profil de la figure 1, avec une représentation schématique de la restitution sur écran d'une image de la ligne de lumière acquise par l'appareil de prise de vue et formée sur la surface longitudinale interne,
- la figure 3 est une représentation schématique en perspective d'un dispositif de contrôle selon la présente invention comprenant une unité optique projetant un faisceau plan de lumière sur la surface longitudinale externe d'un profilé en forme de cornière de section transversale en V,
- la figure 4 est une vue de profil de la figure 3, avec une représentation schématique de la restitution sur écran d'une image de la ligne de lumière acquise par l'appareil de prise de vue et formée sur la surface longitudinale interne,
- la figure 5 est une vue en en perspective d'un dispositif de contrôle selon la présente invention comprenant deux unités optiques, à savoir une première unité optique projetant un faisceau plan de lumière sur la surface longitudinale interne d'un profilé en forme de cornière de section transversale en V et une deuxième unité optique projetant un faisceau plan de lumière sur la surface longitudinale externe dudit profilé,
- la figure 6 est une vue de profil de la figure 5, avec une représentation schématique de la restitution sur écran de deux images des deux lignes de lumière acquises par les deux appareils de prise de vue et formées respectivement sur les surfaces longitudinales interne et externe,
- la figure 7 est une vue de face schématique d'une ligne de production selon la présente invention comprenant un dispositif de contrôle selon la présente invention disposé entre le système de traction et le système de coupe.

Si on se réfère aux figures annexées on peut voir un dispositif de contrôle selon la présente invention pour contrôler la qualité et/ou mesurer des paramètres dimensionnels de profilés 1 réalisés dans une ligne de production de profilés 1 à partir d'au moins une bande 1' de matériau, plus particulièrement au moins une bande 1' de carton ou de matériau thermoplastique tel que par exemple du PVC, ledit dispositif de contrôle permettant la mise en œuvre du procédé de contrôle selon la présente invention, chaque profilé 1 présentant une forme de cornière ou autre forme de profilé plié, par exemple en forme de V, de U ou de W, et s'étendant le long d'un axe longitudinal X en étant délimité d'un côté, par sa surface longitudinale externe 1a et, de l'autre côté opposé, par sa surface longitudinale interne 1b.

Conformément à la présente invention, un tel dispositif de contrôle comprend, d'une part, au moins une unité optique 2, 3 comprenant un appareil de projection de lumière 2, tel qu'un laser, apte à émettre un faisceau plan de lumière 2a permettant de former une ligne lumineuse L sur le profilé 1 à contrôler et un appareil de prise de vue 3, tel qu'une caméra, le ou chaque appareil de prise de vue 3 présentant un axe optique O et étant associé(e) audit appareil de projection de lumière 2 et apte à acquérir au moins une image de ladite ligne lumineuse L et, d'autre part, une unité de traitement électronique, non représentée, reliée fonctionnellement à la ou à chaque unité optique 2, 3 pour traiter la ou lesdites images acquises et transmises par le ou lesdits appareil(s) de prise de vue 3.

En outre, à l'état monté du dispositif de contrôle dans la ligne de production, le ou chaque appareil de projection de lumière 2 peut être apte à projeter, sur la surface longitudinale externe 1a et/ou sur la surface longitudinale interne 1b du profilé à contrôler, son faisceau plan de lumière 2a, dans un plan sensiblement perpendiculaire à l'axe longitudinale X, c'est-à-dire perpendiculaire ou sensiblement incliné par rapport à l'axe longitudinale X, pour former, sur au moins l'une desdites surfaces longitudinales externe ou interne 1a, 1b, au moins une ligne lumineuse L s'étendant sensiblement perpendiculairement à l'axe longitudinal X. D'autre part, le ou chaque appareil de prise de vue 3 associé au ou à l'un des appareils de projection de lumière 2 peut être positionné de sorte que son axe optique O soit dirigé vers la ligne lumineuse L en vue d'acquérir au moins une image de cette dernière. L'unité de traitement électronique est apte à analyser la ou chaque ligne lumineuse L en vue de contrôler la qualité et/ou mesurer des paramètres dimensionnels du profilé 1, c'est-à-dire au moins un paramètre dimensionnel du profilé 1.

Un tel procédé de contrôle selon la présente invention pour contrôler la qualité et/ou mesurer des paramètres dimensionnels de profilés 1 réalisés dans une ligne de production de profilés 1 à partir d'au moins une bande de matériau, plus particulièrement au moins une bande 1' de carton ou autre matériau thermoplastique tel que par exemple du PVC, ledit profilé 1 présentant plus particulièrement une forme de cornière ou autre forme de profilé plié, par exemple en forme de V, de U ou de W, et s'étendant le long d'un axe longitudinal X en étant délimité, d'un côté, par sa surface longitudinale externe 1a et, de l'autre côté opposé, par sa surface longitudinale interne 1b, consiste, à partir d'un tel dispositif de contrôle que comprend la ligne de production :
- à projeter, grâce à l'appareil de projection de lumière 2 ou aux appareils de projections de lumière 2, sur le profilé 1 à contrôler, c'est-à-dire sur sa surface externe, plus particulièrement sur la surface longitudinale externe 1a et/ou sur la surface longitudinale interne 1b, au moins un faisceau plan de lumière 2a, dans un plan sensiblement perpendiculaire à l'axe longitudinale X, c'est-à-dire dans un plan perpendiculaire ou sensiblement incliné par rapport à l'axe longitudinale X, pour former, sur ledit profilé 1, plus particulièrement sur au moins l'une desdites surfaces longitudinales externe ou interne 1a, 1b, au moins une ligne lumineuse L s'étendant sensiblement perpendiculairement à l'axe longitudinal X,
- à acquérir, grâce à l'appareil de prise de vue 3 associé au ou à l'un des appareils de projection de lumière 2 dont l'axe optique O est dirigé vers la ou l'une des ligne(s) lumineuse(s) F, au moins une image de la ou de chaque ligne lumineuse et
- à analyser, à l'aide de l'unité de traitement électronique 4, la ou chaque image d'une ligne lumineuse L en vue de contrôler la qualité et/ou mesurer des paramètres dimensionnels du profilé 1, c'est-à-dire au moins un paramètre dimensionnel du profilé 1.

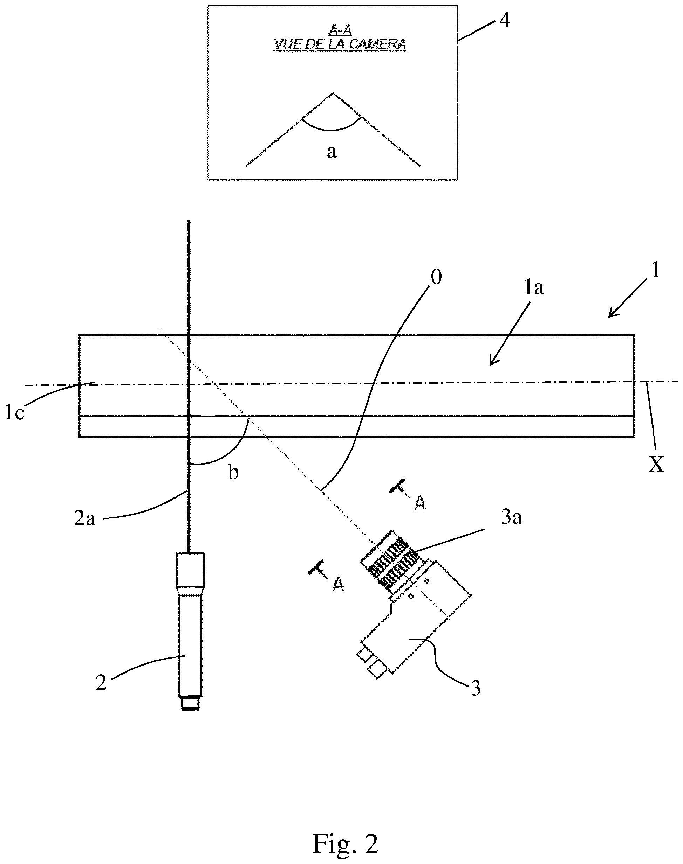

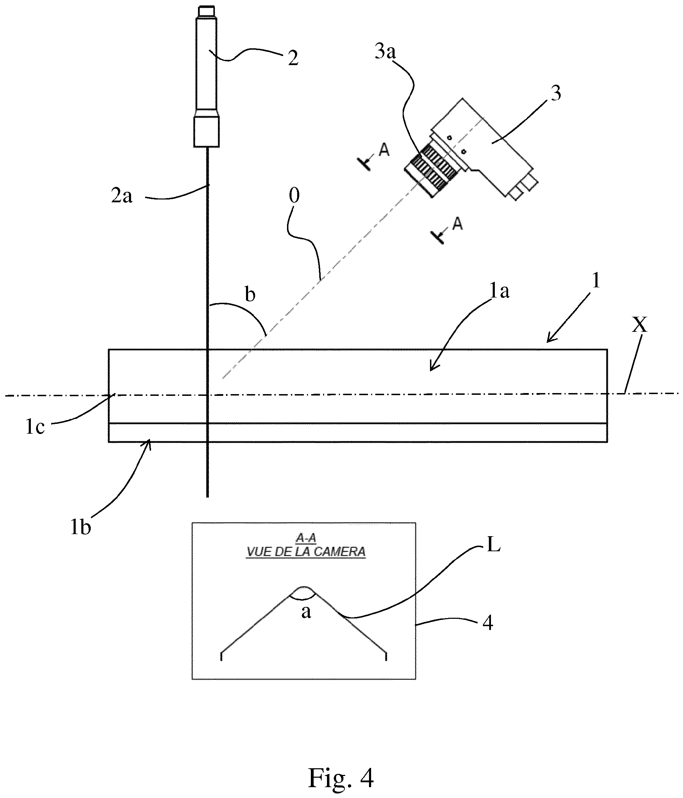

De préférence, comme on peut le voir notamment sur les figures 2, 4, 6, un tel procédé de contrôle peut consister à acquérir les images de la ou de chaque ligne lumineuse L, d'une part, en positionnant l'axe optique O de l'appareil de prise de vue 3 dans un plan perpendiculaire au faisceau plan de lumière 2a émis par l'appareil de projection de lumière 2 associé audit appareil de prise de vue 3 et, d'autre part, en orientant ledit axe optique O de manière inclinée, de préférence avec un angle b d'inclinaison, de préférence d'environ 20° à 70°, préférentiellement d'environ 30° à 60°, plus préférentiellement de l'ordre de 45°, par rapport audit faisceau plan de lumière 2a. Ces valeurs de l'angle d'inclinaison permettent un contrôle plus particulièrement adapté pour un profilé en forme de cornière, ou autre forme de profilé plié, avec au moins deux ailes longitudinales 1c, 1d inclinées l'une par rapport à l'autre.

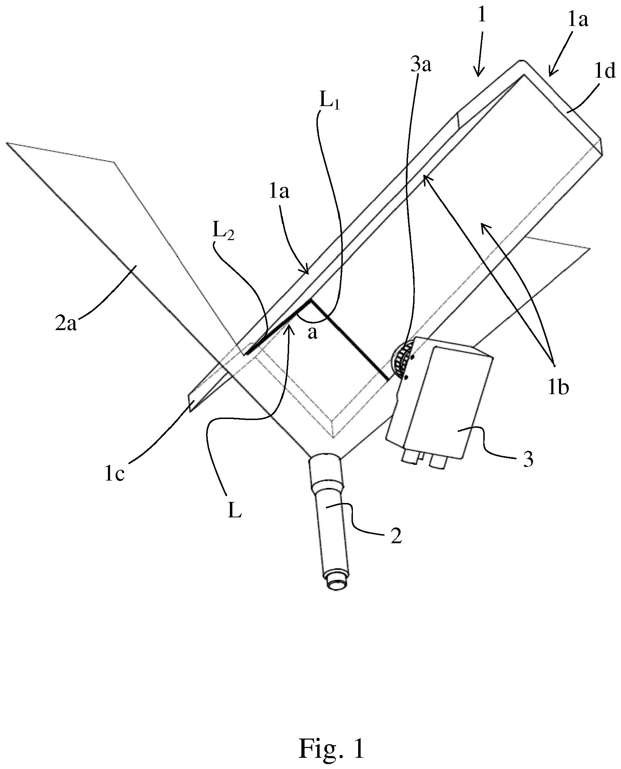

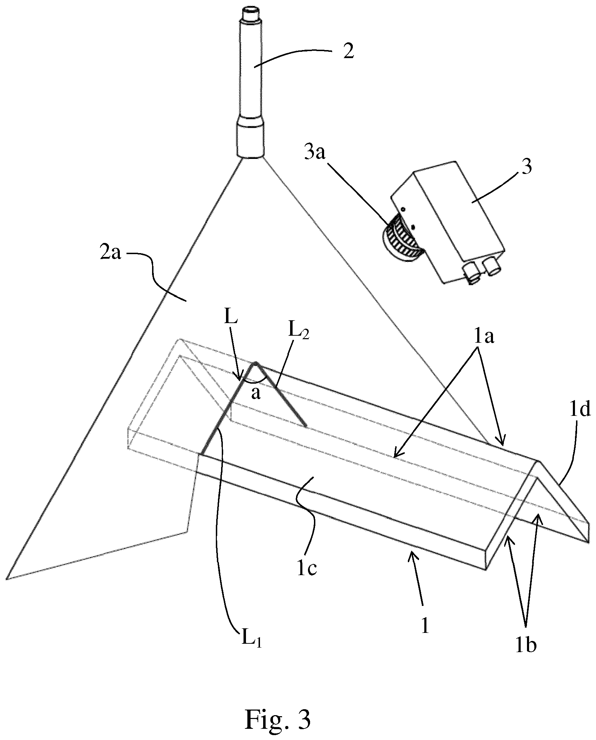

Si on se réfère aux figures 1, 2, 3 et 4 on peut voir que le procédé de contrôle peut consister, à partir d'une unité optique 2, 3 disposée d'un côté ou de l'autre du profilé 1 à contrôler, à former une ligne lumineuse L sur la surface longitudinale interne ou externe 1a, 1b.

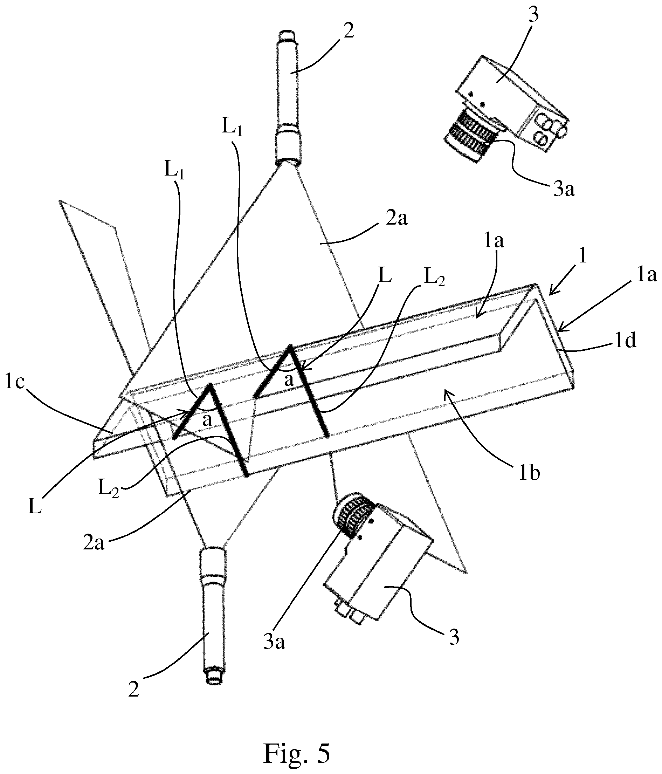

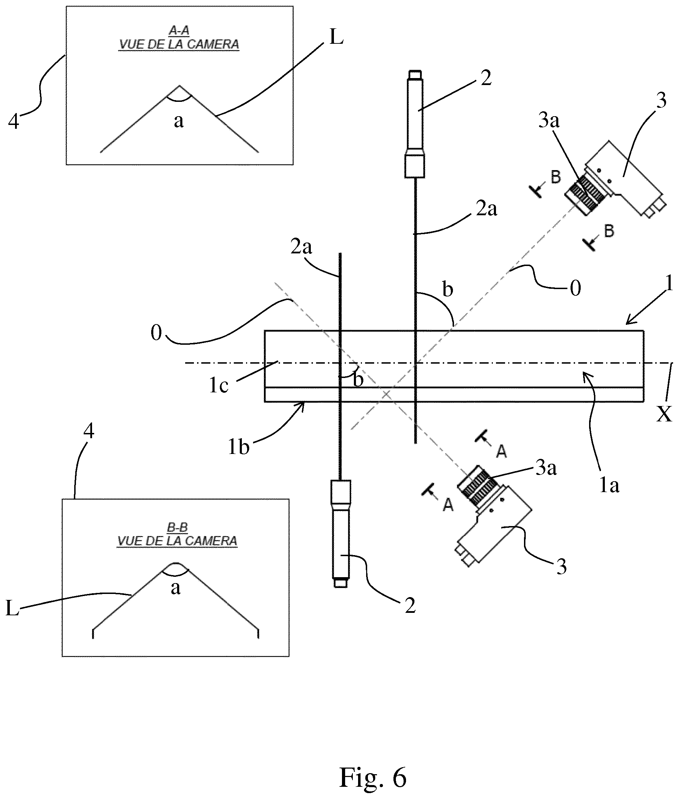

Si on se réfère aux figures 5 et 6, on peut voir que dans une autre forme de réalisation le procédé de contrôle peut consister, à partir de deux unités optiques 2, 3 disposées de part et d'autre du profilé 1 à contrôler, à former, grâce à l'une des unités optiques 2, 3, une première ligne lumineuse L sur la surface longitudinale externe 1a et, grâce à l'autre unité optique 2, 3, une deuxième ligne lumineuse L sur la surface longitudinale interne 1b, de préférence décalée par rapport à la première ligne lumineuse L le long de l'axe longitudinale X.

Si on se réfère aux figures 1, 2, 3, 4, 5 et 6 on peut voir que le profilé 1 à contrôler peut présenter une forme de cornière, ou autre forme de profilé plié, par exemple en forme de V, de U ou de W, avec au moins deux ailes longitudinales 1c, 1d inclinées l'une par rapport à l'autre. Le procédé de contrôle consiste, à partir de la ou de l'une des ligne(s) lumineuse(s) formée(s) sur la surface longitudinale externe ou interne 1a, 1b et comportant deux branches lumineuses L1, L2 inclinées entre elles du fait de l'inclinaison desdites ailes, l'une desdites branches lumineuses L1 étant formée sur l'une desdites ailes longitudinales 1c et l'autre branche lumineuses L2 étant formée sur l'autre aile longitudinale 1d, à contrôler la valeur de l'angle entre lesdites ailes en mesurant, sur la ou les images acquises, l'angle a entre les deux branches L1, L2 de la ligne lumineuse et en la comparant avec une valeur d'angle de référence en vue de détecter un écart d'angle et donc un défaut au niveau du pliage de la ou des bandes.

Le procédé de contrôle peut consister en outre, à partir de la ligne lumineuse formée sur la surface longitudinale externe ou interne 1a, 1b, à contrôler la largeur desdites ailes longitudinales 1c, 1d inclinées entre elles, en mesurant, sur la ou les images acquises, la longueur de chaque branche lumineuse L1, L2 de la ligne lumineuse et en la comparant avec une longueur de référence afin d'en déduire un écart éventuel et un éventuel défaut au niveau du formage du profilé.

De préférence, comme on peut le voir sur les figures 2, 4 et 6, et pour permettre la mise œuvre du procédé, dans la ou chaque unité optique 2, 3 du dispositif de contrôle selon la présente invention, à l'état monté dans la ligne de production, l'appareil de prise de vue 3 peut être configuré de sorte que son axe optique O soit, d'une part, positionné dans un plan perpendiculaire au faisceau plan de lumière 2a émis par l'appareil de projection de lumière 2 associé audit appareil de prise de vue 3 et, d'autre part, orienté de manière inclinée, de préférence avec un angle b d'inclinaison d'environ 20° à 70°, préférentiellement d'environ 30° à 60°, plus préférentiellement de l'ordre de 45°, par rapport au faisceau plan de lumière 2a. Ces valeurs de l'angle d'inclinaison permettent un contrôle par le dispositif de contrôle plus particulièrement adapté pour un profilé en forme de cornière, ou autre forme de profilé plié, par exemple en forme de V, de U ou de W, avec au moins deux ailes longitudinales 1c, 1d inclinées l'une par rapport à l'autre. La présente invention peut prévoir que, dans le cas d'une pluralité d'unités optiques 2, 3, par exemple deux unités optiques 2, 3, l'angle b d'inclinaison d'une unité optique soit différent de celui de l'autre unité optique.

Dans un dispositif de contrôle selon la présente invention comprenant une unité optique 2, 3, comme on peut le voir sur les figures 1, 2, 3 et 4, celle-ci peut être disposée, à l'état monté dans la ligne de production, d'un côté ou de l'autre du profilé 1 à contrôler pour former la ligne lumineuse L sur la surface longitudinale interne ou externe 1a, 1b.

Dans une variante, dans un dispositif de contrôle selon la présente invention comprenant deux unités optiques 2, 3, comme on peut le voir sur les figures 5 et 6, à l'état monté dans la ligne de production, celles-ci peuvent être disposées de part et d'autre du profilé 1 à contrôler de manière à pouvoir former, grâce à l'une des unités optiques 2, 3, une première ligne lumineuse L sur la surface longitudinale externe 1a d'un profilé 1 et, grâce à l'autre unité optique 2, 3, une deuxième ligne lumineuse L sur la surface longitudinale interne 1b dudit profilé. De préférence, les deux unités optiques 2, 3 peuvent être disposées en étant décalées le long de l'axe longitudinal X de sorte que la première ligne lumineuse L ne se trouve pas dans le même plan perpendiculaire à l'axe longitudinal X que celui de la deuxième ligne lumineuse L, ce qui permet d'obtenir plus de données de mesure et/ou représentatives de la qualité du profilé en vue de leur analyse par l'unité de traitement.

L'unité de traitement électronique peut comprendre une mémoire dans laquelle est enregistrée au moins une valeur d'angle de référence et ladite unité de traitement électronique 4 peut être apte à contrôler l'angle entre les ailes longitudinales 1a, 1b du profilé 1 en mesurant, sur la ou les images acquises, l'angle a entre les deux branches L1, L2 de la ligne lumineuse L et en comparant la valeur dudit angle a avec la ou l'une des valeurs d'angle de référence mémorisées.

L'unité de traitement électronique peut comprendre un microprocesseur, au moins une mémoire. Elle peut comprendre au moins un programme informatique. Elle peut en outre comprendre un écran de restitution 4 des images acquises.

L'unité de traitement électronique peut comprendre une mémoire dans laquelle est enregistrée au moins une longueur, qui peut être interprétée comme étant une largeur de la partie concernée du profilé. L'unité de traitement peut être apte à contrôler la largeur des ailes longitudinales 1c, 1d du profilé en mesurant, sur la ou les images acquises, la longueur de chaque branche L1, L2 de la ligne lumineuse L et en la comparant avec une longueur de référence afin d'en déduire un écart éventuel. La mémoire peut être la même mémoire que celle dans laquelle est enregistrée la valeur d'angle de référence.

Le ou chaque appareil de projection de lumière 2 peut être un laser, tel que de préférence un laser connu sous le nom de laser à ligne, par exemple un laser à ligne commercialisé par la société LAP Gmbh sous la référence « LAP 5FDL », c'est-à-dire avec, de préférence, une longueur de ligne jusqu'à, par exemple, 4 m, une puissance en sortie de l'ordre de, par exemple, 5 mW, et un angle d'ouverture, par exemple, de 80°, et une classe de Laser, par exemple, égale à 1. Ces données sont données à titre d'exemple, d'autres Laser ou appareils de projection analogues pouvant être utilisés dans la présente invention.

Le ou chaque appareil de prise de vue 3 peut être une caméra avec un objectif présentant un axe optique O. Une telle caméra peut être par exemple une caméra commercialisée par la société Baumer SAS sous la référence « BAUMER Vision sensor VS XC700C03X00IP ». Une caméra de ce type est adaptée pour lire une des lignes lumineuses et transmettre un signal représentatif de ladite ligne à l'unité de traitement 4 en vue de son analyse selon la présente invention.

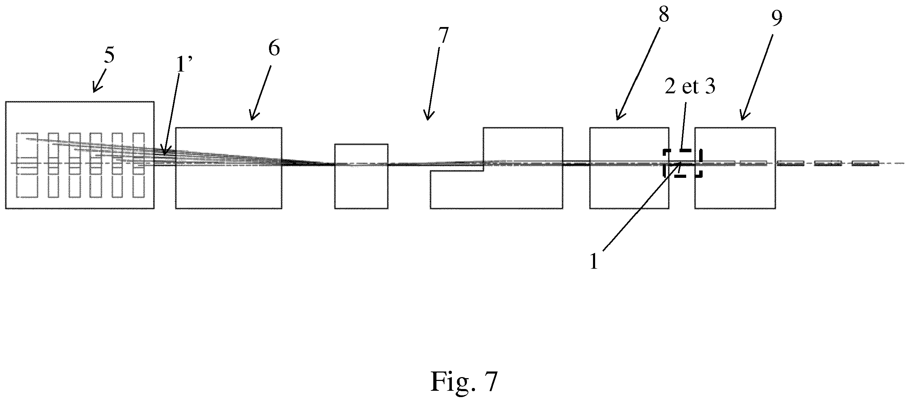

La présente invention, comme on peut le voir que la figure 7, a également pour objet une ligne de production de profilés 1 réalisés à partir d'au moins une bande de matériau, plus particulièrement au moins une bande 1' de carton ou de matériau thermoplastique tel que par exemple du PVC, ledit profilé 1 présentant une forme de cornière ou autre forme de profilé plié, ladite ligne de production comprenant successivement, depuis l'amont vers l'aval, une pluralité de postes, à savoir :
- un poste de stockage et d'alimentation 5, tel que par exemple une unité de dévidage comprenant au moins un dévidoir, dans lequel la ou chaque bande 1' est stockée, par exemple à l'état enroulé dans ladite unité de dévidage,
- éventuellement, dans le cas de la réalisation de profilés à partir d'une pluralité de bandes 1', une unité de d'assemblage 6, par exemple par encollage ou thermo-scellage, des bandes entre elles pour former le profilé,
- éventuellement, dans le cas de profilés en forme de cornière ou autre forme de profilé plié, une unité de formage pour plier le profilé, par exemple en forme de V, de U ou de W,
- un poste de traction 8,
- un poste de coupe 9 pour permettre la coupe d'une longueur donnée de profilé.

Conformément à la présente invention une telle ligne de production comprend en outre un dispositif de contrôle selon la présente invention monté dans ladite ligne, de préférence entre le poste de formage 7 et le poste de coupe 9.

De préférence, le dispositif de contrôle selon la présente invention est monté dans la ligne de production en étant positionné entre le dispositif de traction et le dispositif de coupe.

Un tel procédé de contrôle ou dispositif de contrôle, permet alors d'exploiter la forme et les dimensions du profilé pour prévenir les opérateurs d'éventuels défauts (exemples : angle de cornière, longueurs des ailes, accrocs sur le produit, ...). Ces données peuvent également être exploitées pour des dispositifs de corrections automatiques.

Bien entendu, l'invention n'est pas limitée au mode de réalisation décrit et représenté aux dessins annexés. Des modifications restent possibles, notamment du point de vue de la constitution des divers éléments ou de l'implantation du dispositif ou par substitution d'équivalents techniques, sans sortir pour autant du domaine de protection de l'invention, qui est défini par les revendications ci-jointes.

## Revendications

1. Procédé de contrôle pour contrôler la qualité et/ou mesurer des paramètres dimensionnels de profilés (1) réalisés dans une ligne de production à partir d'au moins une bande (1') de matériau, plus particulièrement au moins une bande (1') de carton ou de matériau thermoplastique tel que par exemple du PVC, chaque profilé (1) présentant une forme de cornière ou autre forme de profilé plié avec au moins deux ailes longitudinales (1c, 1d) inclinées l'une par rapport à l'autre et s'étendant le long d'un axe longitudinal (X) en étant délimité dans la direction de son épaisseur, d'un côté, par sa surface longitudinale externe (1a) et, de l'autre côté opposé, par sa surface longitudinale interne (1b), consistant, à partir d'un dispositif de contrôle que comprend ladite ligne de production, ledit dispositif de contrôle comprenant, d'une part, au moins une unité optique (2, 3) comprenant un appareil de projection de lumière (2), tel qu'un laser, apte à émettre un faisceau plan de lumière (2a) permettant de former une ligne lumineuse (L) sur le profilé (1) à contrôler et un appareil de prise de vue (3), tel qu'une caméra, présentant un axe optique (O) et étant associé(e) audit appareil de projection de lumière (2) et apte à acquérir au moins une image de ladite ligne lumineuse (L) et, d'autre part, une unité de traitement électronique reliée fonctionnellement à la ou à chaque unité optique (2) pour traiter la ou lesdites images acquises et transmises par le ou lesdits appareil(s) de prise de vue (3) :
- à projeter sur le profilé (1) à contrôler, sur sa surface longitudinale externe (1a) et/ou sur sa surface longitudinale interne (1b), au moins un faisceau plan de lumière (2a), dans un plan sensiblement perpendiculaire à l'axe longitudinale (X), pour former, sur ledit profilé (1), sur au moins l'une desdites surfaces longitudinales externe ou interne (1a, 1b), au moins une ligne lumineuse (L) s'étendant sensiblement perpendiculairement à l'axe longitudinal (X),
- à acquérir au moins une image de la ou de chaque ligne lumineuse et
- à analyser la ou chaque image d'une ligne lumineuse (L) en vue de contrôler la qualité et/ou mesurer des paramètres dimensionnels du profilé (1) **caractérisé en ce qu'**il consiste, à partir de la ou de l'une des ligne(s) lumineuse(s) formée(s) sur la surface longitudinale externe ou interne (1a, 1b) et comportant deux branches lumineuses (L1, L2) inclinées entre elles du fait de l'inclinaison desdites ailes, l'une desdites branches lumineuses (L1) étant formée sur l'une desdites ailes longitudinales (1c) et l'autre branche lumineuses (L2) étant formée sur l'autre aile longitudinale (1d), à contrôler la valeur de l'angle entre lesdites ailes en mesurant, sur la ou les images acquises, l'angle (a) entre les deux branches (L1, L2) de la ligne lumineuse et en la comparant avec une valeur d'angle de référence.

2. Procédé de contrôle selon la revendication 1, **caractérisé en ce qu'**il consiste à acquérir les images de la ou de chaque ligne lumineuse (L), d'une part, en positionnant l'axe optique (O) de l'appareil de prise de vue (3) dans un plan perpendiculaire (P) au faisceau plan de lumière (2a) émis par l'appareil de projection de lumière (2) associé audit appareil de prise de vue (3a) et, d'autre part, en orientant ledit axe optique (O) de manière inclinée, de préférence avec un angle (b) d'inclinaison d'environ 20 à 70°, préférentiellement d'environ 30° à 60°, plus préférentiellement de l'ordre de 45°, par rapport audit faisceau plan de lumière (2a).

3. Procédé de contrôle selon la revendication 1 ou la revendication 2 **caractérisé en ce qu'**il consiste, à partir d'une unité optique (2, 3) disposée d'un côté ou de l'autre du profilé (1) à contrôler, à former une ligne lumineuse (L) sur la surface longitudinale interne ou externe (1a, 1b) dudit profilé (1).

4. Procédé de contrôle selon la revendication 1 ou la revendication 2 **caractérisé en ce qu'**il consiste, à partir de deux unités optiques (2, 3) disposées de part et d'autre du profilé (1) à contrôler, à former, grâce à l'une des unités optiques (2, 3), une première ligne lumineuse (L) sur la surface longitudinale externe (1a) et, grâce à l'autre unité optique (2, 3), une deuxième ligne lumineuse (L) sur la surface longitudinale interne (1b), de préférence décalée de la première ligne lumineuse (L) le long de l'axe longitudinale (X).

5. Procédé de contrôle selon l'une quelconque des revendications 1 à 4, **caractérisé en ce qu'**il consiste, à partir de la ligne lumineuse (L) formée sur la surface longitudinale externe ou interne (1a, 1b)à contrôler la largeur desdites ailes longitudinales (1c, 1d) inclinées entre elles, en mesurant, sur la ou les images acquises, la longueur de chaque branche lumineuse (L1, L2), de la ligne lumineuse et en la comparant avec une longueur de référence afin d'en déduire un écart éventuel.

6. Dispositif de contrôle pour contrôler la qualité et/ou mesurer des paramètres dimensionnels de profilés (1) réalisés dans une ligne de production à partir d'au moins une bande (1') de matériau, plus particulièrement au moins une bande (1') de carton ou de matériau thermoplastique tel que par exemple du PVC, ledit dispositif de contrôle permettant la mise en œuvre du procédé de contrôle selon l'une quelconque desdites revendications 1 à 5, ledit profilé (1) présentant une forme de cornière ou autre forme de profilé plié avec au moins deux ailes longitudinales (1c, 1d) inclinées l'une par rapport à l'autre et s'étendant le long d'un axe longitudinal (X) en étant délimité dans la direction de son épaisseur, d'un côté, par sa surface longitudinale externe (1a) et, de l'autre côté opposé, par sa surface longitudinale interne (1b), comprenant, d'une part, au moins une unité optique (2, 3) comprenant un appareil de projection de lumière (2), tel qu'un laser, apte à émettre un faisceau plan de lumière (2a) permettant de former une ligne lumineuse (L) sur le profilé (1) à contrôler et un appareil de prise de vue (3), tel qu'une caméra, présentant un axe optique (O) et étant associé(e) audit appareil de projection de lumière (2) et apte à acquérir au moins une image de ladite ligne lumineuse (L) comportant deux branches lumineuses (L1, L2) inclinées entre elles du fait de l'inclinaison desdites ailes, l'une desdites branches lumineuses (L1) étant formée sur l'une desdites ailes longitudinales (1c) et l'autre branche lumineuses (L2) étant formée sur l'autre aile longitudinale (1d) et, d'autre part, une unité de traitement électronique (4) reliée fonctionnellement à la ou à chaque unité optique (2, 3) pour traiter la ou lesdites images acquises et transmises par le ou lesdits appareil(s) de prise de vue (3), **caractérisé en ce que** l'unité de traitement électronique (4) comprend une mémoire dans laquelle est enregistrée au moins une valeur d'angle de référence et **en ce que** ladite unité de traitement électronique (4) est apte à contrôler l'angle entre les ailes longitudinales (1a, 1b) du profilé (1) en mesurant, sur la ou les images acquises, l'angle (a) entre les deux branches (L1, L2) de la ligne lumineuse (L) et en comparant la valeur dudit angle (a) avec la ou l'une des valeurs d'angle de référence mémorisées.

7. Dispositif de contrôle selon la revendication 6, **caractérisé en ce que**, à l'état monté dans la ligne de production, le ou chaque appareil de projection de lumière (2) est apte à projeter, sur la surface longitudinale externe (1a) et/ou sur la surface longitudinale interne (1b) du profilé à contrôler, au moins un faisceau plan de lumière (2a), dans un plan sensiblement perpendiculaire à l'axe longitudinale (X) dudit profilé, pour former, sur au moins l'une desdites surfaces longitudinales externe ou interne (1a, 1b), la ou ou l'une des ligne(s) lumineuse(s) (L) de sorte que celle-ci s'étende sensiblement perpendiculairement audit axe longitudinal (X) et **en ce que** le ou chaque appareil de prise de vue (3) associé au ou à l'un des appareils de projection de lumière (2) est positionné de sorte que son axe optique (O) soit dirigé vers la ligne lumineuse (F) pour pouvoir acquérir au moins une image de cette dernière.

8. Dispositif de contrôle, selon la revendication 6 ou la revendication 7, permettant la mise en œuvre du procédé de contrôle selon la revendication 2, **caractérisé en ce que**, à l'état monté dans la ligne de production, dans la ou chaque unité optique (2, 3), l'appareil de prise de vue (3) est configuré de sorte que son axe optique (O) est, d'une part, positionné dans un plan perpendiculaire au faisceau plan de lumière (2a) émis par l'appareil de projection de lumière (2) associé audit appareil de prise de vue (3a) et, d'autre part, orienté de manière inclinée, de préférence avec un angle (b) d'inclinaison d'environ 20° à 70°, préférentiellement d'environ 30° à 60°, plus préférentiellement de l'ordre de 45°, par rapport au faisceau plan de lumière (2a).

9. Dispositif de contrôle, selon l'une quelconque des revendications 6 à 8 permettant la mise en œuvre du procédé de contrôle selon la revendication 3, **caractérisé en ce que**, à l'état monté dans la ligne de production, l'unité optique (2, 3) est disposée d'un côté ou de l'autre du profilé (1) à contrôler pour former la ligne lumineuse (L) sur la surface longitudinale interne ou externe (1a, 1b).

10. Dispositif de contrôle, selon l'une quelconque des revendications 7 à 8, permettant la mise en œuvre du procédé de contrôle selon la revendication 4 **caractérisé en ce que** deux unités optiques (2, 3) sont disposées de part et d'autre du profilé (1) à contrôler de manière à pouvoir former, grâce à l'une des unités optiques (2, 3), une première ligne lumineuse (L) sur la surface longitudinale externe (1a) d'un profilé (1) et, grâce à l'autre unité optique (2, 3), une deuxième ligne lumineuse (L) sur la surface longitudinale interne (1b) dudit profilé, de préférence décalée de la première ligne lumineuse (L) le long de l'axe longitudinale (X).

11. Dispositif de contrôle, selon l'une quelconque des revendications 6 à 10, permettant la mise en œuvre du procédé de contrôle selon la revendication 5 **caractérisé en ce que** l'unité de traitement électronique (4) comprend une mémoire dans laquelle est enregistrée au moins une longueur et **en ce que** ladite unité de traitement (4) est apte à contrôler la largeur desdites ailes longitudinales (1c, 1d) en mesurant, sur la ou les images acquises, la longueur de chaque branche (L1, L2) de la ligne lumineuse (L) et en la comparant avec une longueur de référence afin d'en déduire un écart éventuel.

12. Ligne de production de profilés (1) réalisés à partir d'au moins une bande (1') de matériau, plus particulièrement au moins une bande (1') de carton ou de matériau thermoplastique tel que par exemple du PVC, ledit profilé (1) présentant une forme plane ou de cornière ou autre forme de profilé plié, ladite ligne de production comprenant successivement, depuis l'amont vers l'aval, une pluralité de postes, à savoir
- un poste de stockage et d'alimentation (5), tel que par exemple une unité de dévidage comprenant au moins un dévidoir, dans lequel la ou chaque bande 1' est stockée, par exemple à l'état enroulé dans ladite unité de dévidage dans lequel la ou chaque bande (1') est stockée,
- éventuellement, dans le cas de la réalisation de profilés à partir d'une pluralité de bandes (1'), une unité de d'assemblage (6), par exemple par encollage ou thermo-scellage, des bandes entre elles pour former le profilé,
- éventuellement, dans le cas de profilés en forme de cornière ou autre forme de profilé plié, une unité de formage pour plier le profilé, par exemple en forme de V, de U ou de W,
- un poste de traction (8),
- un poste de coupe (9) pour permettre la coupe d'une longueur donnée de profilé,
**caractérisé en ce qu'**elle comprend en outre un dispositif de contrôle selon l'une quelconque des revendications 6 à 11 monté dans ladite ligne.

13. Ligne de production, selon la revendication 12, **caractérisé en ce que** le dispositif de contrôle est monté dans la ligne de production en étant disposé entre l'unité de traction (8) et l'unité de coupe (9).

## Patentansprüche

1. Kontrollverfahren zur Kontrolle der Qualität und/oder Messung der Abmessungsparameter von Profilen (1), die in einer Produktionsstrecke aus mindestens einem Materialband (1'), insbesondere mindestens einem Band (1') aus Karton oder thermoplastischem Material wie beispielsweise PVC hergestellt werden, wobei jedes Profil (1) eine Winkel- oder andere Form eines gefalteten Profils mit mindestens zwei längs verlaufenden Flügeln (1c, 1d) aufweist, die bezogen aufeinander geneigt sind, und sich entlang einer Längsachse (X) erstreckt, wobei es in der Richtung seiner Dicke auf einer Seite von seiner äußeren Längsfläche (1a) und auf der anderen, gegenüberliegenden Seite von seiner inneren Längsfläche (1b) begrenzt ist, das darin besteht, anhand einer Kontrollvorrichtung, die die Produktionsstrecke umfasst, die Kontrollvorrichtung umfassend einerseits mindestens eine optische Einheit (2, 3), die eine Lichtprojektionsvorrichtung (2), wie etwa einen Laser, der geeignet ist, ein ebenes Lichtbündel (2a) zu emittieren, das es gestattet, eine Lichtlinie (L) auf dem zu kontrollierenden Profil (1) zu bilden, und eine Bildaufnahmevorrichtung (3), wie etwa eine Kamera, die eine optische Achse (O) aufweist und der Lichtprojektionsvorrichtung (2) zugeordnet ist und geeignet ist, mindestens ein Bild der Lichtlinie (L) zu erfassen, umfasst, und andererseits eine elektronische Verarbeitungseinheit, die funktionell mit der oder jeder optischen Einheit (2) verbunden ist, um das oder die Bilder zu verarbeiten, die von der oder den Bildaufnahmevorrichtung(en) (3) erfasst und übertragen werden:
- auf das zu kontrollierende Profil (1) auf dessen äußere Längsfläche (1a) und/oder dessen innere Längsfläche (1b) mindestens ein ebenes Lichtbündel (2a) in einer Ebene zu projizieren, die im Wesentlichen senkrecht zur Längsachse (X) verläuft, um auf dem Profil (1) auf mindestens einer der äußeren oder inneren Längsfläche (1a, 1b) mindestens eine Lichtlinie (L) zu bilden, die sich im Wesentlichen senkrecht zur Längsachse (X) erstreckt,
- mindestens ein Bild der oder jeder Lichtlinie zu erfassen, und
- das oder jedes Bild einer Lichtlinie (L) zu analysieren, um die Qualität zu kontrollieren und/oder Abmessungsparameter des Profils (1) zu messen,
**dadurch gekennzeichnet, dass** es darin besteht, anhand der oder einer der Lichtlinie (n), die auf der äußeren oder inneren Längsfläche (1a, 1b) gebildet ist oder sind und zwei Lichtschenkel (L1, L2) aufweisen, die aufgrund der Neigung der Flügel zueinander geneigt sind, wobei einer der Lichtschenkel (L1) auf einem der längs verlaufenden Flügel (1c) und der andere Lichtschenkel (L2) auf dem anderen längs verlaufenden Flügel (1d) gebildet ist, den Wert des Winkels zwischen den Flügeln zu kontrollieren, indem auf dem oder den erfassten Bildern der Winkel (a) zwischen den zwei Schenkeln (L1, L2) der Lichtlinie gemessen wird und indem er mit einem Referenzwinkelwert verglichen wird..

2. Kontrollverfahren nach Anspruch 1, **dadurch gekennzeichnet, dass** es darin besteht, die Bilder der oder jeder Lichtlinie (L) zu erfassen, einerseits durch Positionierung der optischen Achse (O) der Bildaufnahmevorrichtung (3) in einer senkrechten Ebene (P) zum ebenen Lichtbündel (2a), das von der Lichtprojektionsvorrichtung (2) emittiert wird, die der Bildaufnahmevorrichtung (3a) zugeordnet ist, und andererseits durch geneigte Ausrichtung der optischen Achse (O), vorzugsweise um einen Neigungswinkel (b) von ungefähr 20 bis 70°, vorzugsweise ungefähr 30° bis 60°, besser noch in der Größenordnung von 45° zum ebenen Lichtbündel (2a).

3. Kontrollverfahren nach Anspruch 1 oder 2, **dadurch gekennzeichnet, dass** es darin besteht, ausgehend von einer optischen Einheit (2, 3), die auf der einen oder anderen Seite des zu kontrollierenden Profils (1) angeordnet ist, eine Lichtlinie (L) auf der inneren oder äußeren Längsfläche (1a, 1b) des Profils (1) zu bilden.

4. Kontrollverfahren nach Anspruch 1 oder 2, **dadurch gekennzeichnet, dass** es darin besteht, ausgehend von zwei optischen Einheiten (2, 3), die beiderseits des zu kontrollierenden Profils (1) angeordnet sind, mithilfe einer der optischen Einheiten (2, 3) eine erste Lichtlinie (L) auf der äußeren Längsfläche (1a) und mithilfe der anderen optischen Einheit (2, 3) eine zweite Lichtlinie (L) auf der inneren Längsfläche (1b), die vorzugsweise von der ersten Lichtlinie (L) entlang der Längsachse (X) versetzt ist, zu bilden.

5. Kontrollverfahren nach einem der Ansprüche 1 bis 4, **dadurch gekennzeichnet, dass** es darin besteht, anhand der Lichtlinie (L), die auf der äußeren oder inneren Längsfläche (1a, 1b) gebildet ist, die Breite der längs verlaufenden Flügel (1c, 1d) zu kontrollieren, die zueinander geneigt sind, indem auf dem oder den erfassten Bildern die Länge jedes Lichtschenkels (L1, L2) der Lichtlinie gemessen wird und sie mit einer Referenzlänge verglichen wird, um davon eine mögliche Abweichung herzuleiten.

6. Kontrollvorrichtung zur Kontrolle der Qualität und/oder Messung der Abmessungsparameter von Profilen (1), die in einer Produktionsstrecke aus mindestens einem Materialband (1'), insbesondere mindestens einem Band (1') aus Karton oder thermoplastischem Material wie beispielsweise PVC hergestellt werden, wobei die Kontrollvorrichtung die Umsetzung des Kontrollverfahrens nach einem der Ansprüche 1 bis 5 gestattet, wobei das Profil (1) eine Winkel- oder andere Form eines gefalteten Profils mit mindestens zwei längs verlaufenden Flügeln (1c, 1d) aufweist, die bezogen aufeinander geneigt sind, und sich entlang einer Längsachse (X) erstreckt, wobei es in der Richtung seiner Dicke auf einer Seite von seiner äußeren Längsfläche (1a) und auf der anderen, gegenüberliegenden Seite von seiner inneren Längsfläche (1b) begrenzt ist, umfassend einerseits mindestens eine optische Einheit (2, 3), die eine Lichtprojektionsvorrichtung (2), wie etwa einen Laser, der geeignet ist, ein ebenes Lichtbündel (2a) zu emittieren, das es gestattet, eine Lichtlinie (L) auf dem zu kontrollierenden Profil (1) zu bilden, und eine Bildaufnahmevorrichtung (3) wie etwa eine Kamera umfasst, die eine optische Achse (O) aufweist und der Lichtprojektionsvorrichtung (2) zugeordnet ist und geeignet ist, mindestens ein Bild der Lichtlinie (L) zu erfassen, die zwei Lichtschenkel (L1, L2) aufweist, die aufgrund der Neigung der Flügel zueinander geneigt sind, wobei einer der Lichtschenkel (L1) auf einem der längs verlaufenden Flügel (1c) und der andere Lichtschenkel (L2) auf dem anderen der längs verlaufenden Flügel (1d) gebildet ist, und andererseits eine elektronische Verarbeitungseinheit (4), die funktionell mit der oder jeder optischen Einheit (2, 3) verbunden ist, um das oder die Bilder zu verarbeiten, die von der oder den Bildaufnahmevorrichtung(en) (3) erfasst und übertragen werden, **dadurch gekennzeichnet, dass** die elektronische Verarbeitungseinheit (4) einen Speicher umfasst, in dem mindestens ein Referenzwinkelwert gespeichert ist, und dadurch, dass die elektronische Verarbeitungseinheit (4) geeignet ist, den Winkel zwischen den längs verlaufenden Flügeln (1a, 1b) des Profils (1) durch Messung des Winkels (a) zwischen den zwei Schenkeln (L1, L2) der Lichtlinie (L) auf dem oder den erfassten Bildern und durch Vergleich des Werts des Winkels (a) mit dem oder einem der gespeicherten Referenzwinkelwerte zu kontrollieren.

7. Kontrollvorrichtung nach Anspruch 6, **dadurch gekennzeichnet, dass** im Montagezustand in der Produktionsstrecke die oder jede Lichtprojektionsvorrichtung (2) geeignet ist, auf die äußere Längsfläche (1a) und/oder die innere Längsfläche (1b) des zu kontrollierenden Profils mindestens ein ebenes Lichtbündel (2a) in einer Ebene zu projizieren, die im Wesentlichen senkrecht zur Längsachse (X) des Profils verläuft, um auf mindestens einer der äußeren oder inneren Längsfläche (1a, 1b) die oder eine der Lichtlinie(n) (L) zu bilden, damit sich diese im Wesentlichen senkrecht zur Längsachse (X) erstreckt, und dadurch, dass die oder jede Bildaufnahmevorrichtung (3), die der oder einer der Lichtprojektionsvorrichtungen (2) zugeordnet ist, so positioniert ist, dass ihre optische Achse (O) auf die Lichtlinie (F) gerichtet ist, um mindestens ein Bild letzterer erfassen zu können.

8. Kontrollvorrichtung nach Anspruch 6 oder 7, die die Umsetzung des Kontrollverfahrens nach Anspruch 2 gestattet, **dadurch gekennzeichnet, dass** im Montagezustand in der Produktionsstrecke in der oder jeder optischen Einheit (2, 3) die Bildaufnahmevorrichtung (3) so ausgebildet ist, dass ihre optische Achse (O) einerseits in einer senkrechten Ebene zum ebenen Lichtbündel (2a), das von der Lichtprojektionsvorrichtung (2) emittiert wird, die der Bildaufnahmevorrichtung (3a) zugeordnet ist, positioniert, und andererseits vorzugsweise um einen Neigungswinkel (b) von ungefähr 20° bis 70°, vorzugsweise ungefähr 30° bis 60°, besser noch in der Größenordnung von 45° zum ebenen Lichtbündel (2a) geneigt ausgerichtet ist.

9. Kontrollvorrichtung nach einem der Ansprüche 6 bis 8, die die Umsetzung des Kontrollverfahrens nach Anspruch 3 gestattet, **dadurch gekennzeichnet, dass** im Montagezustand in der Produktionsstrecke die optische Einheit (2, 3) auf der einen oder anderen Seite des zu kontrollierenden Profils (1) angeordnet ist, um die Lichtlinie (L) auf der inneren oder äußeren Längsfläche (1a, 1b) zu bilden.

10. Kontrollvorrichtung nach einem der Ansprüche 7 bis 8, die die Umsetzung des Kontrollverfahrens nach Anspruch 4 gestattet, **dadurch gekennzeichnet, dass** zwei optische Einheiten (2, 3) beiderseits des zu kontrollierenden Profils (1) so angeordnet sind, dass sie mithilfe einer der optischen Einheiten (2, 3) eine erste Lichtlinie (L) auf der äußeren Längsfläche (1a) eines Profils (1) und mithilfe der anderen optischen Einheit (2, 3) eine zweite Lichtlinie (L) auf der inneren Längsfläche (1b) des Profils, die vorzugsweise von der ersten Lichtlinie (L) entlang der Längsachse (X) versetzt ist, bilden können.

11. Steuervorrichtung nach einem der Ansprüche 6 bis 10, die die Umsetzung des Kontrollverfahrens nach Anspruch 5 gestattet, **dadurch gekennzeichnet, dass** die elektronische Verarbeitungseinheit (4) einen Speicher umfasst, in dem mindestens eine Länge gespeichert ist, und dadurch, dass die Verarbeitungseinheit (4) geeignet ist, die Breite der längs verlaufenden Flügel (1c, 1d) zu kontrollieren, indem auf dem oder den erfassten Bildern die Länge jedes Schenkels (L1, L2) der Lichtlinie (L) gemessen wird und sie mit einer Referenzlänge verglichen wird, um davon eine mögliche Abweichung herzuleiten.

12. Produktionsstrecke für Profile (1), die aus mindestens einem Materialband (1'), insbesondere mindestens einem Band (1') aus Karton oder thermoplastischem Material wie beispielsweise PVC hergestellt werden, wobei das Profil (1) eine ebene, Winkel- oder andere Form eines gefalteten Profils aufweist, wobei die Produktionsstrecke nacheinander von stromauf nach stromab eine Mehrzahl von Stationen umfasst, und zwar
- eine Speicherungs- und Zuführstation (5) wie beispielsweise eine Abwickeleinheit, die mindestens eine Rolle umfasst, auf der das oder jedes Band 1' gespeichert ist, zum Beispiel im aufgewickelten Zustand in der Abwickeleinheit, in der das oder jedes Band (1') gespeichert ist,
- eventuell, im Falle der Herstellung von Profilen aus einer Mehrzahl von Bändern (1'), eine Einheit zur Verbindung (6) der Bänder miteinander, zum Beispiel durch Verkleben oder Heißsiegeln, um das Profil zu bilden,
- eventuell, im Falle von Profilen mit Winkelform oder einer anderen Form eines gefalteten Profils, eine Formungseinheit zum Falten des Profils, zum Beispiel in V-, U- oder W-Form,
- eine Zugstation (8),
- eine Schneidstation (9) zum Zuschneiden einer bestimmten Profillänge,
**dadurch gekennzeichnet, dass** sie ferner eine Kontrollvorrichtung nach einem der Ansprüche 6 bis 11 umfasst, die in der Strecke montiert ist.

13. Produktionsstrecke nach Anspruch 12, **dadurch gekennzeichnet, dass** die Kontrollvorrichtung in der Produktionsstrecke montiert ist, wobei sie zwischen der Zugeinheit (8) und der Schneideinheit (9) angeordnet ist.

## Claims

1. Checking method for checking quality and/or measuring dimensional parameters of profiles (1) produced in a production line from at least one strip (1') of material, more particularly at least one strip (1') of cardboard or of thermoplastic material such as PVC for example, each profile (1) having an angle bracket form or other profile form foldend with at least two longitudinal wings (1c, 1d) that are inclined with respect to one another and extend along a longitudinal axis (X) while being delimited in the thicknesswise direction thereof, on one side, by its outer longitudinal surface (1a) and, on the other opposite side, by its inner longitudinal surface (1b), consisting, from a checking device included in said production line, said checking device comprising, on the one hand, at least one optical unit (2, 3) comprising a light projection device (2), such as a laser, capable of emitting a flat light beam (2a) that makes it possible to form a light line (L) on the profile (1) to be checked and an imaging device (3), such as a camera, having an optical axis (O) and being associated with said light projection device (2) and capable of acquiring at least one image of said light line (L) and, on the other hand, an electronic processing unit linked operationally to the or each optical unit (2) for processing said image or images acquired and transmitted by said imaging device or devices (3):
- in projecting onto the profile (1) to be checked, on its outer longitudinal surface (1a) and/or on its inner longitudinal surface (1b), at least one flat light beam (2a), in a plane substantially at right angles to the longitudinal axis (X), to form, on said profile (1), on at least one of said outer or inner longitudinal surfaces (1a, 1b), at least one light line (L) extending substantially at right angles to the longitudinal axis (X),
- in acquiring at least one image of the or each light line and
- in analysing the or each image of a light line (L) in order to check the quality and/or measure dimensional parameters of the profile (1),
**characterized in that** it consists, from the or one of the light lines formed on the outer or inner longitudinal surface (1a, 1b) and comprising two light branches (L1, L2) inclined with respect to one another by virtue of the inclination of said wings, one of said light branches (L1) being formed on one of said longitudinal wings (1c) and the other light branch (L2) being formed on the other longitudinal wing (1d), in checking the value of the angle between said wings by measuring, on the image or images acquired, the angle (a) between the two branches (L1, L2) of the light line and by comparing it with a reference angle value.

2. Checking method according to Claim 1, **characterized in that** it consists in acquiring the images of the or each light line (L), on the one hand, by positioning the optical axis (O) of the imaging device (3) in a plane (P) at right angles to the flat light beam (2a) emitted by the light projection device (2) associated with said imaging device (3a) and, on the other hand, by orienting said optical axis (O) so as to be inclined, preferably with an inclination angle (b) of approximately 20 to 70°, preferentially approximately 30° to 60°, more preferentially of the order of 45°, with respect to said flat light beam (2a).

3. Checking method according to Claim 1 or Claim 2, **characterized in that** it consists, from an optical unit (2, 3) disposed on one side or the other of the profile (1) to be checked, in forming a light line (L) on the inner or outer longitudinal surface (1a, 1b) of said profile (1).

4. Checking method according to Claim 1 or Claim 2, **characterized in that** it consists, from two optical units (2, 3) disposed on either side of the profile (1) to be checked, in forming, by virtue of one of the optical units (2, 3), a first light line (L) on the outer longitudinal surface (1a) and, by virtue of the other optical unit (2, 3), a second light line (L) on the inner longitudinal surface (1b), preferably offset from the first light line (L) along the longitudinal axis (X).

5. Checking method according to any one of Claims 1 to 4, **characterized in that** it consists, from the light line (L) formed on the outer or inner longitudinal surface (1a, 1b), in checking the width of said longitudinal wings (1c, 1d) that are inclined with respect to one another, by measuring, on the image or images acquired, the length of each light branch (L1, L2) of the light line and by comparing it with a reference length in order to deduce therefrom any deviation.

6. Checking device for checking the quality and/or measuring dimensional parameters of profiles (1) produced in a production line from at least one strip (1') of material, more particularly at least one strip (1') of cardboard or of thermoplastic material such as PVC for example, said checking device allowing the checking method according to any one of said Claims 1 to 5 to be implemented, said profile (1) having an angle bracket form or another folded profile form with at least two longitudinal wings (1c, 1d) that are inclined with respect to one another and extending along a longitudinal axis (X) while being delimited in the thicknesswise direction thereof, on one side, by its outer longitudinal surface (1a) and, on the other opposite side, by its inner longitudinal surface (1b), comprising, on the one hand, at least one optical unit (2, 3) comprising a light projection device (2), such as a laser, capable of emitting a flat light beam (2a) that makes it possible to form a light line (L) on the profile (1) to be checked and an imaging device (3), such as a camera, having an optical axis (O) and being associated with said light projection device (2) and capable of acquiring at least one image of said light line (L) comprising two light branches (L1, L2) that are inclined with respect to one another by virtue of the inclination of said wings, one of said light branches (L1) being formed on one of said longitudinal wings (1c) and the other light branch (L2) being formed on the other longitudinal wing (1d) and, on the other hand, an electronic processing unit (4) linked operationally to the or each optical unit (2, 3) for processing said image or images acquired and transmitted by said imaging device or devices (3), **characterized in that** the electronic processing unit (4) comprises a memory in which is stored at least one reference angle value and **in that** said electronic processing unit (4) is capable of checking the angle between the longitudinal wings (1a, 1b) of the profile (1) by measuring, on the image or images acquired, the angle (a) between the two branches (L1, L2) of the light line (L) and by comparing the value of said angle (a) with the or one of the stored reference angle values.

7. Checking device according to Claim 6, **characterized in that**, when mounted in the production line, the or each light projection device (3) is capable of projecting, onto the outer longitudinal surface (1a) and/or onto the inner longitudinal surface (1b) of the profile to be checked, at least one flat light beam (2a), in a plane substantially at right angles to the longitudinal axis (X) of said profile, to form, on at least one of said outer or inner longitudinal surfaces (1a, 1b), the or one of the light lines (L) such that the latter extends substantially at right angles to said longitudinal axis (X), and **in that** the or each imaging device (3) associated with the or one of the light projection devices (2) is positioned such that its optical axis (O) is directed towards the light line (F) to be able to acquire at least one image thereof.

8. Checking device according to Claim 6 or Claim 7, allowing the checking method according to Claim 2 to be implemented, **characterized in that**, when mounted in the production line, in the or each optical unit (2, 3), the imaging device (3) is configured such that its optical axis (O) is, on the one hand, positioned in a plane at right angles to the flat light beam (2a) emitted by the light projection device (2) associated with said imaging device (3a) and, on the other hand, oriented so as to be inclined, preferably with an inclination angle (b) of approximately 20° to 70°, preferentially approximately 30° to 60°, more preferentially of the order of 45°, with respect to the flat light beam (2a).

9. Checking device according to any one of Claims 6 to 8, allowing the checking method according to Claim 3 to be implemented, **characterized in that**, when mounted in the production line, the optical unit (2, 3) is disposed on one side or the other of the profile (1) to be checked to form the light line (L) on the inner or outer longitudinal surface (1a, 1b).

10. Checking device according to either of Claims 7 and 8, allowing the checking method according to Claim 4 to be implemented, **characterized in that** two optical units (2, 3) are disposed on either side of the profile (1) to be checked so as to be able to form, by virtue of one of the optical units (2, 3), a first light line (L) on the outer longitudinal surface (1a) of a profile (1) and, by virtue of the other optical unit (2, 3), a second light line (L) on the inner longitudinal surface (1b) of said profile, preferably offset from the first light line (L) along the longitudinal axis (X).

11. Checking device according to any one of Claims 6 to 10, allowing the checking method according to Claim 5 to be implemented, **characterized in that** the electronic processing unit (4) comprises a memory in which is stored at least one length and **in that** said processing unit (4) is capable of checking the width of said longitudinal wings (1c, 1d) by measuring on the image or images acquired, the length of each branch (L1, L2) of the light line (L) and by comparing it with a reference length in order to deduce therefrom a deviation.

12. Production line for profiles (1) produced from at least one strip (1') of material, more particularly at least one strip (1') of cardboard or of thermoplastic material such as PVC for example, said profile (1) having a flat or angle bracket form or other folded profile form, said production line comprising, in succession, from upstream to downstream, a plurality of stations, namely
- a storage and supply station (5), such as a reeling unit for example comprising at least one paying-out reel, in which the or each strip 1' is stored, for example wound in said reeling unit in which the or each strip (1') is stored,
- possibly, in the case of the production of profiles from a plurality of strips (1'), a unit (6) for assembling, for example by gluing or heat-sealing, strips together to form the profile,
- possibly, in the case of profiles in angle bracket form or other folded profile form, a forming unit for folding the profile, for example in V, U or W form,
- a pulling station (8),
- a cutting station (9) to allow the cutting of a given length of profile,
**characterized in that** it further comprises a checking device according to any one of Claims 6 to 11 mounted in said line.

13. Production line according to Claim 12, **characterized in that** the checking device is mounted in the production line by being disposed between the pulling unit (8) and the cutting unit (9).
